# EUROPÄISCHE PATENTANMELDUNG

(11) **EP 3 945 439 A1**
(43) Veröffentlichungstag der Anmeldung: **02.02.2022**
(21) Anmeldenummer: 20187911.1
(22) Anmeldetag: 27.07.2020
(51) Int. Cl.: G06F 21/51, G06F 21/64, G06F 21/62, G06F 21/52

(54) **ERWEITERTE INTEGRITÄTSÜBERWACHUNG EINES CONTAINERABBILDES**

(71) Anmelder: Siemens Aktiengesellschaft, 80333 München (DE)
(72) Erfinder: Knierim, Christian, 81373 München (DE)

(57) **Zusammenfassung**

Verfahren zur erweiterten Integritätsüberwachung eines Containerabbilds (100), bei dem das Containerabbild (100) mindestens zwei Schichten (L1,..,L4) ein Basisabbild (L1) und mindestens eine Anwendungsschicht (L2, L3, L4), die mindestens eine Änderungsoperation auf dem Basisabbild (L1) ausführt, enthält, mit folgenden Schritten:
- bei einem Zusammenbauen des Containerabbildes (100), Zuordnen (S1) einer für die Schicht spezifische Integritätsregel (R1, R2, R3, R4) zu dieser Schicht (L1, L2, L3, L4), für mindestens eine der Schichten des Containerabbilds (100),
- Bereitstellen (S2) des Containerabbilds (100) und der zugeordneten Integritätsregeln (R1, R2, R3, R4) an einen Gastrechner (30), und
- Erzeugen (S3) einer Containerinstanz basierend auf dem Containerabbild (100) durch eine Laufzeitumgebung des Gastrechners (30),
- Überprüfen (S4) jeder einzelnen Schicht (L1, L2, L3, L4) gegenüber der zugeordneten Integritätsregel (R1, R2, R3, R4) bei der Ausführung der Containerinstanz auf der Laufzeitumgebung, und
- Ausführen (S5) der Schicht (L1, L2, L3, L4) abhängig von der zugeordneten Schicht-spezifischen Integritätsregel (R1, R2, R3, R4).

## Beschreibung

Die Erfindung betrifft ein Verfahren sowie ein System zu erweiterten Integritätsüberwachung eines Containerabbilds, bei dem das Containerabbild mindestens zwei Schichten, ein Basisabbild und mindestens eine Anwendungsschicht, die mindestens eine Änderungsoperation auf dem Basisabbild ausführt, enthält.

Computerimplementierte Dienste oder Anwendungen können mittels virtueller Container auf einer speziellen Ausführungsumgebung eines Gerätes bereitgestellt werden. Ein Gerät kann dabei beispielsweise ein Server in einer zentralen, von mehreren Nutzern gemeinsam verwendeten Serverumgebung, aber auch ein dezentral, am Rand eines Netzwerks angeordnetes Randgerät oder ein Endgerät sein, dass einem einzelnen Nutzer zugeordnet ist. Dem Server oder Gerät wird dabei ein Containerabbild bereitgestellt, aus dem zur Laufzeit des Dienstes ein oder mehrere Container-Instanzen generiert werden, die die Funktionen der Anwendung ausführen. Das Containerabbild kann beispielsweise in einem von der Open-Container-Initiative (OCI) definierten Format aus einzelnen Schichten, sogenannten Layern, aufgebaut sein. Eine erste Schichte enthält üblicherweise Ressourcen, wie beispielsweise Bibliotheken und Programme oder auch ein Paketmanager und wird Basisabbild bezeichnet. Das Containerabbild umfasst des Weiteren mindestens eine Anwendungsschicht, die eine oder mehrere Änderungsoperationen auf dem Basisabbild ausführt und dadurch die Anwendung bereitstellt.

Um die Integrität einer computerimplementierten Anwendung zu überwachen sind Container-Integritätsüberwachungssysteme bekannt, mit deren Hilfe Richtlinien für Container-Instanzen erstellt werden können, bei deren Verletzung beispielsweise eine Alarmierung ausgelöst wird, gewisse Aktionen blockiert werden oder die ganze Containerinstanz gestoppt wird. In diesen Richtlinien können mehrere unterschiedliche erlaubte oder verbotene Aktionen definiert sein. Des Weiteren kann konfiguriert werden, welche Programme innerhalb der Containerinstanz erlaubt oder verboten sind.

Problematisch ist hierbei, dass diese Richtlinien üblicherweise vom Betreiber einer Herstellungsplattform für das Containerabbild in einem "Trial and Error"-Verfahren erstellt werden. Dies erfordert ein aufwendiges und vollständiges Testen der Anwendung. Dabei wird das in Schichten aufgebaute OCI-Format von Containerabbildern nicht unterstützt wird, sodass Containerinstanzen, die nicht vollständig bis zur letzten Schicht gestartet werden, nicht optimal geschützt werden können.

Es ist somit die Aufgabe der vorliegenden Erfindung, die Bereitstellung von Richtlinien für die Integritätsüberwachung effizienter und einfacher zu gestalten und insbesondere eine vollständige Integritätsüberwachung auch für schichtbasierte Containerabbilder zu ermöglichen.

Die Aufgabe wird durch die in den unabhängigen Ansprüchen beschriebenen Maßnahmen gelöst. In den Unteransprüchen sind vorteilhafte Weiterbildungen der Erfindung dargestellt.

Ein erster Aspekt der Erfindung betrifft ein Verfahren zur erweiterten Integritätsüberwachung eines Containerabbilds, bei dem das Containerabbild mindestens zwei Schichten, ein Basisabbild und mindestens eine Anwendungsschicht, die mindestens eine Änderungsoperation auf dem Basisabbild ausführt, enthält, mit folgenden Schritten:
- bei einem Zusammenbauen des Containerabbilds, Zuordnen einer für die Schicht spezifische Integritätsregel zu dieser Schicht, für mindestens eine der Schichten des Containerabbilds,
- Bereitstellen des Containerabbilds und der zugeordneten Integritätsregeln an einen Gastrechner, und
- Erzeugen einer Containerinstanz basierend auf dem Containerabbild durch eine Laufzeitumgebung des Gastrechners,
- Überprüfen jeder einzelnen Schicht gegenüber der zugeordneten Integritätsregel bei der Ausführung der Containerinstanz auf der Laufzeitumgebung, und
- Ausführen der Schicht, abhängig von der zugeordneten Schicht-spezifischen Integritätsregel.

Somit werden bereits beim Erstellen des Containerabbildes Integritätsregeln definiert und der jeweiligen Schicht zugeordnet. Die Integritätsregel für eine Schicht kann eine einzige Regel aber auch mehrere Regeln enthalten, die unterschiedliche Aspekte für die Schicht spezifizieren. Somit können die Integritätsrichtlinien bereits bei ihrer Erstellung von einem Entwickler oder Integrator, der die Container-basierte Anwendung genauestens kennt, erstellt und beim Zusammenbauen des Containerabbilds, einem sogenannten Build-Prozess, integriert werden. Durch die Schichten-basierte Definition von Integritätsregeln ist es des Weiteren möglich Integritätsüberprüfungen so zu definieren, dass diese für die gestarteten Schichten der jeweiligen Instanz angepasst sind. Es können somit auch Containerinstanzen, in denen nicht alle Schichten gestartet werden, in ihrer Ausführung vollständig überprüft werden.

In einer vorteilhaften Ausführungsform wird mindestens einer Basisschicht eine Basisschicht-spezifische Integritätsregel zugeordnet, wobei das Basisabbild mindestens eine Basisschicht enthält.

Somit können nicht nur die Anwendungsschichten und deren Änderungsoperationen auf Integrität überprüft werden, sondern auch das Basisabbild selbst, das wiederum aus mehreren Basisschichten aufgebaut sein kann, bezüglich Integritätsregeln überwacht werden kann.

In einer vorteilhaften Ausführungsform wird bei einem Basisabbild mit mindestens zwei Basisschichten und mindestens zwei zugeordneten Basisschicht-spezifischen Integritätsregeln, beim Zusammenbau des Containerabbildes geprüft, ob sich die Abfolge von Basisschicht-spezifischen Integritätsregeln gegenseitig ausschließen und, falls dies der Fall ist, lediglich die in ihrer Abfolge erste oder letzte Basisschicht-spezifische Integritätsregel gekennzeichnet und dem Basisbild als Ganzes zugeordnet.

Somit kann zu jeder einzelnen Basisschicht eine Integritätsregel erstellt und zugeordnet werden. Die Integritätsregel für die Basisschicht kann somit schnell und unkompliziert modular abhängig von der enthaltenen Basisschicht erstellt werden. Durch das Überprüfen der Basisschicht-spezifischen Integritätsregeln beim Zusammenbauen des Containerabbilds wird frühzeitig und insbesondere vor der Erstellung einer Containerinstanz ein Konflikt zwischen den Basisschicht-spezifischen Integritätsregeln erkannt und eine Lösung dafür gefunden werden.

In einer vorteilhaften Ausführungsform wird durch eine Konfigurationseinstellung für das Zusammenbauen des Containerabbildes vorgegeben, ob die erste oder die letzte Basisschicht-spezifische Integritätsregel dem Basisabbild als Ganzes zugeordnet wird.

Eine Konfigurationseinstellung kann somit bereits beim Erstellen des Containerabbildes hinterlegt werden. Dadurch ist es möglich Integritätsregeln zu definieren, die bei bestimmten, in nachfolgenden Schichten spezifizierten Operationen eine Integritätsverletzung erzeugen. Somit wird festgelegt, welche Integritätsregel bei einem Konflikt zwischen Integritätsregeln gültig sein soll. Eine solche Operation ist beispielsweise eine Installation eines entsprechenden Programmes oder ein Starten eines Prozesses oder ein Öffnen eines dezidierten Netzwerk-Ports. Dadurch kann beispielsweise ein Entwickler des Containerabbildes überprüfen, ob nachfolgende Schichten gemäß einer vom Hersteller des Basisabbilds vorgegebenen Richtlinie spezifiziert sind. Operationen, die unter einem bestimmten Nutzer durchgeführt werden oder auf Bereiche im Dateisystem erfolgen, können somit zu einer Integritätsverletzung führen. Der bestimmte Nutzer kann beispielsweise ein sogenannter "root" sein. Das Basisabbild wird in der Regel von einem Basisabbild-Hersteller an den Erzeuger des Containerabbilds bereitgestellt, wobei der Hersteller des Basisabbildes und der Erzeuger des Containerabbildes unterschiedliche Parteien sind. Insbesondere ist der Hersteller des Basisabbildes mit dem Hersteller der Laufzeitumgebung, auf der die containerbasierte Anwendung ausgeführt werden soll, verbunden. Beispielsweise werden die Laufzeitumgebung und das Basisabbild vom gleichen Hersteller vertrieben oder die Beiden sind vertraglich miteinander verbunden.

In einer vorteilhaften Ausführungsform werden beim Zusammenbauen des Containerabbildes die Schicht-spezifischen Integritätsregeln in einer eigenständigen Datei angeordnet.

Bevorzugt wird eine beim Zusammenbauen für jede Schicht ermittelte Schichtkennung als Zuordnungskennung, mit der für die jeweilige Schicht hinterlegte Integritätsregel verknüpft. Insbesondere wird die Schichtkennung der Schicht der entsprechenden Schicht-spezifischen Integritätsregel zugeordnet. Somit können die Schicht-spezifischen Integritätsregeln getrennt vom Containerabbild abgespeichert bzw. dem Gastrechner bereitgestellt werden. Dies ermöglicht es beispielsweise zwei oder mehr Sätze an Schicht-spezifischen Integritätsregeln für ein Containerabbild zu erstellen und den gesamten Satz, der dann als Datei vorliegt, flexibel dem Containerabbild zuzuordnen.

In einer vorteilhaften alternativen Ausführungsform werden beim Zusammenbauen des Containerabbildes die Schicht-spezifischen Integritätsregeln in eine Metainformation zu den Schichten des Containerabbilds angeordnet werden.

Dies ermöglicht eine enge Kopplung zwischen Schicht und Schicht-spezifischer Integritätsregel. Dadurch wird eine Manipulation der Schicht-spezifischen Richtlinie erschwert. Insbesondere Modifikationen an mehreren Schicht-spezifischen Integritätsregeln werden dadurch aufwendig und erschweren eine gezielte Manipulation.

In einer vorteilhaften Ausführungsform ist eine Art des weiteren Zusammenbaus des Containerabbilds konfigurierbar, wenn beim Zusammenbau des Containerabbilds eine Verträglichkeit zwischen der Schicht und der Schicht-spezifischen Integritätsregel der vorherigen Schicht überprüft und eine Unverträglichkeit festgestellt wird.

Eine Unverträglichkeit wird festgestellt, wenn bei der Verträglichkeitsprüfung ermittelt wird, dass die Schicht nicht mit der Schicht-spezifischen Integritätsregel der vorherigen Schicht verträglich ist. So ist beispielsweise konfigurierbar, dass bei einer festgestellten Unverträglichkeit das Zusammenbauen des Containerabbilds mit einer Fehlermeldung abbricht. Alternativ kann bei einer festgestellten Unverträglichkeit beispielsweise das Zusammenbauens ohne Auswertung der Integritätsregel fortgesetzt werden. Die Arten des weiteren Zusammenbaus sind nicht auf die beiden genannten Beispiele beschränkt. Die Art des Zusammenbauens kann insbesondere im Erstellungsprozess das Containerabbild konfiguriert werden. Die Konfigurierbarkeit ist insbesondere vorteilhaft, wenn diese nur auf Produktionsumgebungen durchgesetzt werden auf Testumgebungen keine Integritätsverletzungen durchgesetzt werden, sondern nur eine Alarmierung stattfinden soll und.

In einer vorteilhaften Ausführungsform erfolgt das Überprüfen jeder einzelnen Schicht gegenüber der zugeordneten Schicht-spezifischen Integritätsregel mittels einer Auswertung von Ereignis-basierten Systemaufrufen durch die Containerinstanz während der Laufzeit.

Mit der Überprüfung von Ereignis-basierten Systemaufrufen kann überprüft werden, welche Aktivität bzw. Operationen eine Containerinstanz während der Laufzeit ausführt und diese Aktivität dann mit den hinterlegten Schicht-basierten Integritätsregeln abgleichen.

In einer vorteilhaften Ausführungsform wird zum Überprüfen jeder einzelnen Schicht gegenüber der zugeordneten Schicht-spezifischen Integritätsregel in zeitlich zyklischen Abständen ein Hashwert über die aus dem Containerabbild erstellte Containerinstanz ermittelt und als Integritätswert einer Referenzdatenbank bereitgestellt und mit mindestens einem vorgegebenen Integritätswert in der Referenzdatenbank verglichen.

Dabei werden Hashwerte über die einzelnen Dateien und Verzeichnisse des Containerabbilds, insbesondere ein Container-Dateisystem, gebildet. Es muss für jede modifizierte oder hinzukommende Datei in einer Schicht definiert werden, für welche Schicht dieser Integritätswert gilt. Bei einer hohen Frequenz von durch die Containerinstanz generierten Ereignisbasierten Systemaufrufen werden häufig nicht alle Systemaufrufe zeitnahe ausgewertet oder Systemaufrufe teilweise verworfen. Durch das zeitlich zyklische Ermitteln von Integritätswerten ist die Überprüfung der Integrität der Schichten unabhängig von Systemaufrufen, sodass auch bei einer hohen Frequenz von Ereignis-basierten Systemaufrufen die Integritätsüberwachung durchgeführt wird.

In einer vorteilhaften Ausführungsform werden die vorgegebenen Integritätswerte und die Referenzdatenbank beim Zusammenbauen des Containerabbildes erstellt.

Dies hat den Vorteil, dass auch nicht signierte Containerabbilder zuverlässig mittels Integritätswert auf Integrität geprüft werden können. Da die vorgegebenen Integritätswerte bereits beim Zusammenbauen des Containerabbildes erstellt werden können Veränderung des Containerabbildes zwischen dem Zusammenbauen und dem Ausführen auf der Laufzeitumgebung bei der Überprüfung festgestellt werden. Somit wird die Integrität des Containerabbildes auch zwischen dem Zusammenbauen und dem Ausführen der daraus abgeleiteten Containerinstanz sichergestellt bzw. eine Manipulation kann festgestellt und darauf reagiert werden. Daraus ergibt sich aber auch ein Vorteil für die Integritätsüberwachung für signierte Containerabbilder. Eine Überprüfung der Signatur des Containerabbilds ist nur möglich, solange das Containerabbild nicht ausgeführt wird, da die Signatur über das nicht ausgeführte Containerabbilds berechnet wird und über die Laufzeit hinweg auf der Instanz Modifikationen durchgeführt werden können. Somit kann die Integrität nicht über den kompletten Lifecycle mit Hilfe von Signaturen bestimmt werden. Wenn die Integritätsregeln beim Build-Prozess mit definiert werden, ist eine durchgängige Integritätsüberwachung, insbesondere auch zur Laufzeit der Containerinstanz, möglich.

In einer vorteilhaften Ausführungsform wird die Referenzdatenbank beim Start des Containerabbilds auf der Laufzeitumgebung des Gastrechners erstellt.

Diese Variante wird bevorzugt für signierte Containerabbilder verwendet. Dabei wird die Integrität des Containerabbilds selbst durch die Signatur des Containerabbilds überprüfbar. In dieser Variante können vorteilhafterweise umgebungsspezifische Parameter der Laufzeitumgebung berücksichtigt werden, beispielsweise Variablen zur Laufzeit-konfigurierbare LogDateien.

In einer vorteilhaften Ausführungsform wird eine Basis-Referenzdatenbank für das Basisabbild vor Ausführung der mindestens einen Anwendungsschicht an die Laufzeitumgebung des Gastrechners bereitgestellt und für jede nachfolgende Schicht ein Unterschiedswert zur vorhergehenden Schicht innerhalb der Basis-Referenzdatenbank ermittelt wird.

Dies ermöglicht eine vereinfachte Erstellung der Schichtbasierten Integritätsregeln und insbesondere der vorgegebenen Integritätswerte. Des Weiteren können einfache Integritätswerte für unterschiedliche Basisabbilder angepasst werden.

In einer vorteilhaften Ausführungsform ist eine maximale Anzahl von Systemaufrufen festlegbar, ab der von einer Überprüfung mittels der Auswertung von Ereignis-basierten Systemaufrufen zu einer Überprüfung mittels Erstellens von Hashwerten gewechselt wird.

Dies ermöglicht es insbesondere bei einer hohen Anzahl von Systemaufrufen, die oftmals mit einem fehlerhaften Bearbeiten der Systemaufrufe oder gar einem Verwerfen von Systemaufrufen verbunden ist, die Integritätsüberwachung dennoch optimiert beibehalten werden kann.

Ein zweiter Aspekt der Erfindung betrifft ein System zur erweiterten Integritätsüberwachung eines Containerabbilds mit mindestens zwei Schichten, umfassend eine ZusammenbauVorrichtung und einen Gastrechner mit einer Laufzeitumgebung, wobei die Zusammenbau-Einrichtung derart ausgebildet ist,
- bei einem Zusammenbauen des Containerabbildes, eine für die Schicht-spezifische Integritätsregel dieser Schicht zuzuordnen,
- das Containerabbild und die zugeordnete Integritätsregeln an den Gastrechner bereitzustellen und
   der Gastrechner derart ausgebildet ist,
- eine Containerinstanz basierend auf dem Containerabbild durch eine Laufzeitumgebung des Gastrechners zu erzeugen,
- jede einzelne Schicht gegenüber der zugeordneten Integritätsregel bei der Ausführung der Containerinstanz auf der Laufzeitumgebung zu überprüfen und
- die Schicht abhängig von der zugeordneten Schicht-spezifischen Integritätsregel auszuführen.

Das System ermöglicht es, bereits beim Erstellen bzw. Zusammenbauen des Containerabbilds Integritätsregeln aufzustellen. Dies kann insbesondere für Containerabbilder, die in einem schichtbasierten OCI-Format erstellt werden, Integritätsregeln aufzustellen.

Ein dritter Aspekt der Erfindung betrifft ein Computerprogrammprodukt, umfassend ein nicht flüchtiges computerlesbares Medium, das direkt in einem Speicher eines digitalen Computers ladbar ist, umfassend Programmcodeteile, die dazu geeignet sind, die Schritte des Verfahrens durchzuführen.

Sofern es in der nachfolgenden Beschreibung nicht anders angegeben ist, beziehen sich die Begriffe "Bereitstellen, Erzeugen, "Überprüfen", "Ausführen" und dergleichen vorzugsweise auf Handlungen und/oder Prozesse und/oder Verarbeitungsschritte, die Daten verändern und/oder erzeugen und/oder die Daten in andere Arten überführen, wobei die Daten insbesondere als physikalische Größen dargestellt werden oder vorliegen können, beispielsweise als elektrische Impulse. Das beschriebene System und darin enthaltenen Vorrichtungen bzw. Rechner bezeichnen elektronische Geräte mit Datenverarbeitungseigenschaften, die mindestens einen Prozessor zur Datenverarbeitung umfassen. Die genannten "Vorrichtungen", beispielsweise die Zusammenbauvorrichtung oder der Gastrechner, können Hardware-technisch und/oder auch Software-technisch implementiert sein. Bei einer Hardware-technischen Implementierung kann die jeweilige Einheit als Vorrichtung oder als Teil einer Vorrichtung, z. B. als Mikroprozessor ausbildet sein. Bei einer Software-technischen Implementierung kann die jeweilige Einheit als Computerprogrammprodukt, als eine Funktion, als eine Routine, als ein Teil eines Programmcodes oder ausführbares Objekt ausgebildet sein.

Ein Computerprogrammprodukt, wie beispielsweise ein Computerprogrammmittel, kann beispielsweise als Speichermedium oder auch in Form einer herunterladbaren Datei von einem Server in einem Netzwerk bereitgestellt oder geliefert werden.

Ausführungsbeispiele des erfindungsgemäßen Verfahrens sowie des erfindungsgemäßen Systems in den Zeichnungen beispielhaft dargestellt und werden anhand der nachfolgenden Beschreibungen näher erläutert. Es zeigen:
- Figur 1: ein Ausführungsbeispiel des erfindungsgemäßen Verfahrens als Flussdiagramm;
- Figur 2: ein Beispiel einer Zuordnung zwischen einem schichtbasierten Containerabbild und den zugeordneten Schicht-spezifischen Integritätsregeln in schematischer Darstellung;
- Figur 3: ein erstes Ausführungsbeispiel eines erfindungsgemäßen Systems und der von den Systemkomponenten ausgeführten Verfahrensschritten in schematischer Darstellung; und
- Figur 4: ein zweites Ausführungsbeispiel des erfindungsgemäßen Systems in Blockdarstellung.

Einander entsprechende Teile sind in allen Figuren mit dem gleichen Bezugszeichen versehen.

Mittels Container bereitgestellte Anwendungen werden üblicherweise als Dateisystem erstellt, beispielsweise über Softwareprodukte wie Docker. Im nachfolgenden Ausführungsbeispiel des erfindungsgemäßen Verfahrens wird gelegentlich auf die Bereitstellung eines Containerabbildes mittels Docker als beispielhafte Bereitstellungsmöglichkeit beschrieben, aber nicht darauf beschränkt. Beliebige andere Bereitstellungssoftware zur Container-Virtualisierung kann ebenfalls verwendet werden.

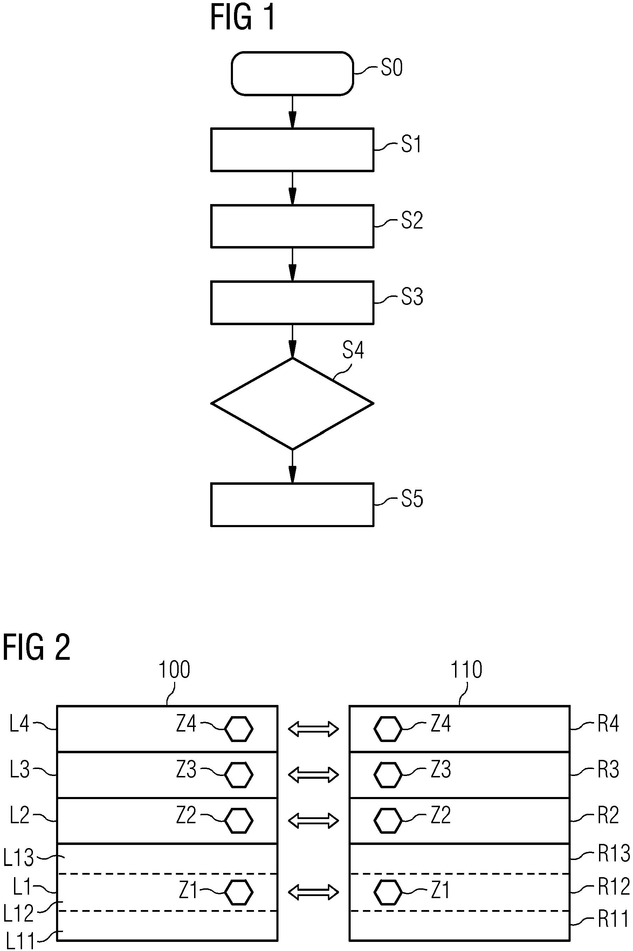

Ein Containerabbild wird in einer Datei-basierten Form spezifiziert und auf ein schichtbasiertes Containerabbild-Dateisystem, beispielsweise entsprechend einem standardisierten Open-Container-Intensiv (OCI)-Format, abgebildet. Eine Befehlszeile in einer solchen Datei entspricht einer Schicht in einem Containerabbild. Die einzelnen Schritte des Verfahrens gehen von einer solchen Struktur und Erzeugung des Containerabbilds aus und werden nun anhand von Fig. 1 näher erläutert.

In einem Ausgangszustand S0 liegt ein in einem Erstellungsprozess erzeugtes Containerabbild vor, das mindestens zwei Schichten umfasst. Die erste, unterste Schicht bildet ein Basisabbild. Eine oder mehrere darüber liegende Schichten, sogenannte Anwendungsschichten, weisen mindestens eine Änderungsoperation auf, die auf dem Basisabbild ausgeführt werden.

Im ersten Verfahrensschritt wird bei einem Zusammenbauen des Containerabbildes zu mindestens einer Schicht eine für die Schicht spezifische Integritätsregel zugeordnet. Das Zusammenbauen des Containerabbildes wird häufig auch als "Build-Prozess" bezeichnet. Dabei wird aus mehreren Komponenten, die beispielsweise in einer Dockerdatei spezifiziert sind, das Containerabbild zusammengefügt und gekoppelt. Eine Befehlszeile in einer Dockerdatei entspricht dabei einer Schicht im Containerabbild. Ein Ersteller der Dockerdatei kann diese Integritätsregeln beispielsweise als Kommentare in die Dockerdatei einpflegen und diese somit schichtbasiert konfigurieren. Durch die Schicht-basierte Definition der Integritätsregeln ist es möglich die Integritätsüberprüfung und - überwachung so zu definieren, dass diese für die gestarteten Schichter der jeweiligen Containerinstanz angepasst sind.

Eine erste Schicht des Containerabbilds, das Basisabbild, enthält wiederum eine oder mehrere Basisschichten. Einer, mehreren oder allen dieser Basisschichten kann wiederum jeweils eine Basisschicht-spezifische Integritätsregel zugeordnet werden. Da der Hersteller des Basisabbilds häufig nicht mit dem Ersteller des Containerabbilds übereinstimmt, werden die Basisschicht-spezifischen Integritätsregeln von diesem Hersteller erzeugt und vordefiniert dem Containerabbild-Hersteller bereitgestellt. Enthält das Basisabbild zwei oder mehrere Basisschichten und mindestens zwei zugeordnete Basisschicht-spezifische Integritätsregeln, so wird beim Zusammenbauen des Containerabbildes geprüft, ob die Abfolge der Basisschicht-spezifischen Integritätsregeln sich gegenseitig ausschließen.

Wenn dies der Fall ist, wird lediglich die erste oder die letzte Basisschicht-spezifische Integritätsregel der Abfolge gekennzeichnet und dem Basisbild als Ganzes zugeordnet. Dies ist notwendig, da die Basisschichten beim Zusammenbauen des Containerabbilds zu einer einzigen ersten Schicht, dem Basisabbild zusammengefasst werden. Somit müssen auch die Basisschicht-spezifischen Integritätsregeln beim Bauen des Containerabbilds zusammengefasst werden. Das Zuordnen der ersten oder letzten Integritätsregel wird bevorzugt über eine Konfigurationseinstellung beim Erstellen des Containerabbilds hinterlegt und beim Zusammenbauen entsprechend ausgeführt. Dem Basisabbild als Ganzes wird somit auch lediglich eine Integritätsregel zugeordnet. Somit ist es möglich Integritätsregeln zu definieren, die Integritätsverletzungen durch in nachfolgenden Schichten spezifizierte Operationen erzeugen.

Diese Konfigurationseinstellung ermöglicht es, ein Regelwerk an Integritätsregeln zu erzeugen, das ohne Widersprüche überprüft werden kann. So kann eine Integritätsverletzung auftreten und erkannt werden, wenn beispielsweise ein vorgegebenes Programm installiert wird oder ein nicht erlaubter Prozess gestartet wird oder ein nicht erlaubter vorbestimmter Netzwerk-Port von der darauffolgenden Schicht des Containerabbildes geöffnet wird. Dadurch kann zum Beispiel ein Entwickler eines Containerabbildes prüfen, ob nachfolgende Schichten gemäß der Hersteller-Richtlinie des Basisabbilds spezifiziert sind. Operationen, die unter einem bestimmten Nutzer durchgeführt werden, beispielsweise einem privilegierten, mit weitreichenden Rechten, beispielsweise sogenannten Root-Rechten ausgestatteten Nutzer oder Operationen, die auf Bereiche im Dateisystem erfolgen, können somit zu einer Integritätsverletzung führen.

Gleiches gilt auch für das gesamte Containerabbild. Ein Beispiel:
In der Integritätsrichtlinie für die unterste Schicht ist definiert, dass in die Datei /tmp nicht geschrieben werden darf. In Schicht 4 wird dann definiert, dass man doch in /tmp schreiben darf. Hier muss dann geregelt werden, welche Regel in diesem Fall ziehen soll, also ob die Schreibberechtigung integritätskonform ist oder nicht.

Um Integritätsüberprüfungen durchführen zu können ist es nicht ausreichend, diese ausschließlich in der Konfigurationsdatei, d. h. der Dockerdatei, zu hinterlegen. Die Schicht-spezifischen Integritätsregeln müssen beim Zusammenbauen des Containerabbilds aus der Konfigurationsdatei mit den Integritätsregeln verknüpft werden. Die Schicht-spezifischen Integritätsregeln werden dazu beispielsweise in einer eigenständigen Datei angeordnet.

In Figur 2 ist eine solche Integritätsregeldatei 110 dargestellt. Die Integritätsregeldatei 110 enthält die Schicht-spezifischen Integritätsregeln R1, R2, R3, R4. Diese sind beispielsweise über jeweils eine Zuordnungskennung Z1, Z2, Z3, Z4 mit der jeweils entsprechenden Schicht, d. h. der Basisschicht L1 bzw. den Anwendungsschichten L2, L3, L4 zugeordnet. Die Zuordnungskennung kann beispielsweise eine Schichtkennung sein, die beim Zusammenbauen der Schichten für jede Schicht ermittelt und jede der Schichten eindeutig kennzeichnet.

Alternativ zur Integritätsregeldatei kann die für eine Schicht spezifische Integritätsregel direkt in eine MetaInformation, beispielsweise im OCI-Dateisystem oder in eine neue, dazu gebildete Erweiterung der vorhandenen Metainformation, eingefügt werden.

Für das Basisabbild L1 des Containerabbilds 100 wird dabei lediglich eine einzige Zuordnungskennung Z1 zur Zuordnung zur entsprechenden Integritätsregel R1 für das Basisabbild verwendet. Die einzelnen Basisschichten L1.1, L1.2, L1.3 werden beim Zusammenbauen des Containerabbildes zu einer einzigen Schicht verbunden, aus der die einzelnen Basisschichten nicht mehr konkret ermittelt werden können.

Beim Zusammenbau des Containerabbildes wird geprüft, ob Integritätsverletzungen aus der Integritätsregel, die der in der Abfolge der Schichten vorhergehenden Schichten herrühren, auftreten. Im Zusammenbauprozess ist dabei konfigurierbar wie, d. h. in welcher Art, der weitere Zusammenbau des Containerabbilds weitergeführt wird, wenn eine Unverträglichkeit festgestellt wird. Eine solche Konfiguration kann durch den Ersteller des Containerabbilds 100 während des konkreten Zusammenbauprozesses konfiguriert werden oder aber durch eine feste Einstellung im Zusammenbauprozess fest vorgegeben werden. Die Art des weiteren Zusammenbaus kann dabei sein, dass das Zusammenbauen mit einem Fehler abbricht oder beispielsweise ohne eine Auswertung der Integritätsregeln fertiggestellt wird.

Sofern das Containerabbild 100 innerhalb eines kontinuierlichen Implementierungs- und Integrationsablauf (CI/CD-Pipeline) erstellt wird, ist dort ebenfalls konfigurierbar, ob bei einer Integritätsverletzung der kontinuierliche Implementierungs- und Integrationsprozess mit einem Fehler angehalten wird oder das Containerabbild fertig erstellt wird. Dadurch kann beispielsweise in einer Testumgebung die Art des weiteren Zusammenbaus derartig konfiguriert werden, dass keine Integritätsverletzungen durchgesetzt werden, sondern nur eine Alarmierung stattfindet. Andererseits kann auf einer Produktionsumgebung die Art des weiteren Zusammenbaus des Containerabbilds so konfiguriert werden, dass bei einer Integritätsverletzung der weitere Zusammenbau des Containerabbildes 100 abgebrochen wird.

Sind das Containerabbild 100 und die Schicht-spezifischen Integritätsregeln zugeordnet, so werden im Verfahrensschritt S2 das Containerabbild 100 und die zugeordneten Integritätsregeln110, beispielsweise die Integritätsregeldatei oder das Containerabbild 100 mit den um die Integritätsregeln 110 erweiterten Metainformation an einen Gastrechner bereitgestellt. Im Gastrechner wird, basierend auf dem Containerabbild 100, eine Containerinstanz durch eine Laufzeitumgebung erzeugt, siehe Verfahrensschritt S3. Auf der Laufzeitumgebung wird bei der Ausführung der Containerinstanz jede einzelne Schicht L1, L2, L3, L4 gegenüber der zugeordneten Integritätsregel R1, R2, R3, R4 überprüft, siehe Verfahrensschritt S4. Abhängig von der zugeordneten Schicht-spezifischen Integritätsregel R1, R2, R3, R4 und den darin definierten Vorgaben bzw. Maßnahmen wird die jeweilige Schicht L1, L2, L3, L4 ausgeführt, siehe Verfahrensschritt S5.

Optional kann bereits eine Integritätsprüfung beim Start der Containerinstanz auf der Laufzeitumgebung durchgeführt werden. Nicht jeder Schicht des Containerabbilds ist notwendigerweise eine Integritätsregel zugeordnet. Beispielsweise könnte für das Containerabbild 100 aus Figur 2 lediglich für die erste, zweite und vierte Schicht L1, L2, L4 eine Schicht-spezifische Integritätsregel R1, R3, R4 vorliegen und zugeordnet sein. Entsprechend wird die Schicht L3 ohne eine Integritätsprüfung ausgeführt. Auch für das Basisabbild L1 muss nicht notwendigerweise eine Integritätsregel R1 zugeordnet sein.

Das Überprüfen jeder einzelnen Schicht gegenüber der zugeordneten Integritätsregel wird beispielsweise mittels einer Auswertung von Ereignis-basierten Systemaufrufen, die durch die Containerinstanz während der Laufzeit erzeugt werden, gegenüber den Integritätsregeln überprüft. Das Überprüfen kann mit Hilfe von speziellen Filterprogrammen durchgeführt werden. Werden auf der Laufzeitumgebung nur signierte Containerabbilder zugelassen, kann über das Auswerten von Systemaufrufen während der gesamten Laufzeit der Containerinstanz hinweg dessen Integrität sichergestellt werden. Durch die Überprüfung der Signatur von signierten Containerabbildern kann sichergestellt werden, dass das Containerabbild als solches nicht verändert wurde. Mit der Überprüfung von Systemaufrufen kann zur Laufzeit überprüft werden, welche Aktivität eine Containerinstanz ausführt und diese Aktivität mit den hinterlegten Integritätsregeln abgleichen.

Bei schneller Abfolge von Systemaufrufen, die von der Containerinstanz erzeugt wurden, ist nicht immer sichergestellt, dass tatsächlich alle Systemaufrufe ausgewertet und die Auswertung zeitnahe erfolgt. Daher kann alternativ dazu die Integritätsüberprüfung zyklisch mit Hilfe von Hashwerten, die über die einzelnen Dateien und Verzeichnisse der Containerinstanz gebildet werden, ausgeführt werden. Diese Hashwerte werden in eine Referenzdatenbank abgelegt und dort mit vorgegebenen Integritätswerten verglichen. Die Überprüfung findet somit in zeitlich wiederkehrenden und bevorzugt vordefinierten regelmäßigen oder variablen Zeitintervallen statt. Die Überprüfung kann auch durch ein Ereignis ausgelöst werden oder in zeitlich variierenden Abständen ausgeführt werden. Der ermittelte Hashwert wird mit mindestens einem vorgegebenen Integritätswert in der Referenzdatenbank verglichen.

Vorzugsweise ist eine maximale Anzahl von Systemaufrufen festlegbar, ab der von einer Überprüfung mittels der Auswertung von ereignisbasierten Systemaufrufen zur Überprüfung mittels Erstellens von Integritätswerten gewechselt wird. Ein Zeitintervall für die zyklische Überprüfung ist dabei konfigurierbar. Beispielsweise kann ein zeitliches Intervall von 60 Sekunden eingestellt werden.

Die Verwendung der Referenzdatenbank hat des Weiteren den Vorteil, dass auf der Laufzeitumgebung nicht zwingend Containerinstanzen signierter Containerabbilder betrieben werden müssen. Dabei wird bereits beim Zusammenbauen des Containerabbilds ein erster vorgegebener Hashwert und somit Integritätswert erzeugt und in der Referenzdatenbank gespeichert. Für jede modifizierte oder hinzukommende Datei muss definiert werden, für welche Schicht der Integritätswert gilt.

Alternativ kann die Referenzdatenbank erst beim Start der Containerinstanz auf dem Gastrechner, auf dem die Laufzeitumgebung betrieben wird, erzeugt werden. Um die Integrität der Containerinstanz zu gewährleisten ist es erforderlich, auf der Laufzeitumgebung ausschließlich signierte Containerabbilder zu verwenden. Bei der beim Start der Containerinstanz erzeugten Referenzdatenbank können umgebungsspezifische Parameter der Laufzeitumgebung, wie beispielsweise konfigurierbare Logdateien, mitberücksichtigt werden. Bei beiden Varianten ist es ebenfalls möglich, dass eine separate Integritätsdatenbank für das Basisabbild, beispielsweise vom Hersteller des Basisabbildes, zur Verfügung gestellt wird und für die weiteren hinzukommenden Schichten lediglich ein Referenzwert zwischen dem Integritätswert der hinzukommenden Schicht und dem Basisabbild berechnet und gespeichert werden.

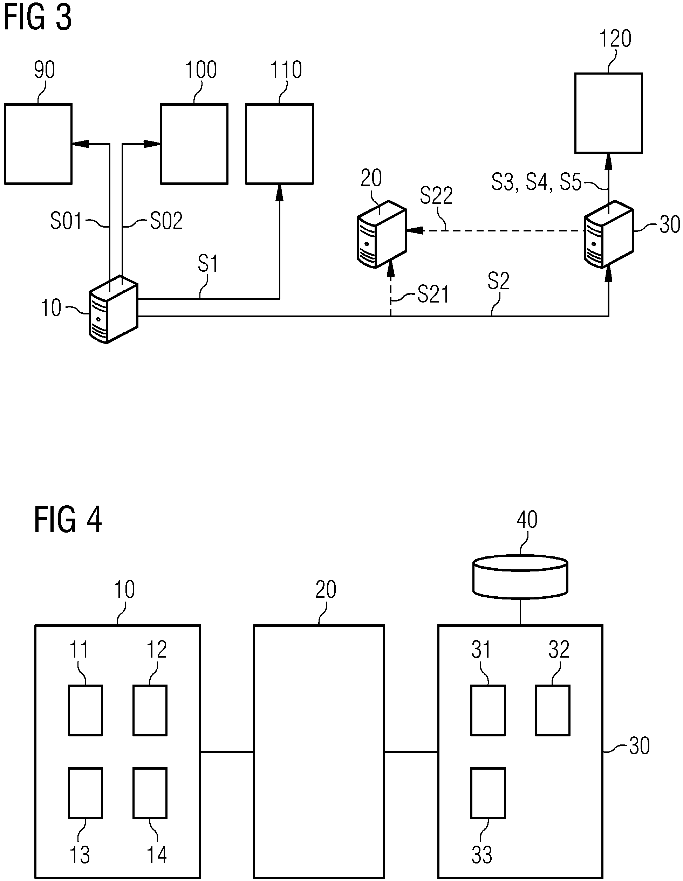

In Figur 3 ist ein System zur erweiterten Integritätsüberwachung von Containerabbildern bzw. der daraus erzeugten Containerinstanzen und die von den einzelnen Komponenten des Systems durchgeführten Verfahrensschritte dargestellt.

Das System umfasst eine Zusammenbauvorrichtung 10, beispielsweise einen Zusammenbauserver, eine Registervorrichtung 20 sowie einen Gastrechner 30. In der Zusammenbauvorrichtung 10 wird eine Konfigurationsdatei 90, beispielsweise eine Dockerdatei, die die einzelnen Komponenten für die Schichten des Containerabbilds 100 enthält, übersetzt und daraus ein Containerabbild 100 zusammengebaut, siehe S02. Beim Zusammenbau des Containerabbilds werden in der Zusammenbauvorrichtung 10 auch die Schicht-spezifischen Integritätsregeln den entsprechenden Schichten zugeordnet. Dies entspricht dem Verfahrensschritt S1. Die Zusammenbauvorrichtung 10 führt auch den zweiten Verfahrensschritt S2 aus und stellt das Containerabbild 100 und die zugeordneten Integritätsregeln 110 an dem Gastrechner 30 bereit.

Die Zusammenbauvorrichtung 10 übermittelt das Containerabbild 100 mit den Integritätsregeln 110 als Metainformation oder des Containerabbild 100 und die Integritätsregeln 110 in zwei unterschiedlichen Dateien an die Registervorrichtung 20, siehe S21. Der Gastrechner 30 ruft von der Registervorrichtung 20 das Containerabbild 100 und die Integritätsregeln 110 ab, siehe S22. Der Gastrechner 30 startet das Containerabbild 100 und erzeugt daraus eine Containerinstanz. Während der anschließenden Laufzeit der Containerinstanz werden die einzelnen Schichten der Containerinstanz gegenüber den zugeordneten Integritätsregeln überprüft, siehe S3 und die Schichten abhängig von der zugeordneten, Schicht-spezifischen Integritätsregel ausgeführt, siehe S4, S5. Die verschiedenen Phasen von der Erstellung einer Konfigurationsdatei über das Zusammenbauen des Containerabbilds und dem Zuordnen der Integritätsregeln bis zum Übermitteln der Containerabbildung, kann über eine kontinuierliche Bereitstellungs- und kontinuierliche Integrationsplattform, auch CI/DI-Plattform, ausgeführt werden.

Figur 4 zeigt die einzelnen Komponenten des Systems im Detail. Die Zusammenbauvorrichtung 10 ist dabei über eine Datenkommunikationsverbindung mit der Registervorrichtung 20, die Registervorrichtung 20 wiederum mit einer Datenkommunikationsverbindung mit dem Gastrechner 30 verbunden. Die Zusammenbauvorrichtung 10 umfasst eine Übersetzungseinheit 11, eine Zuordnungseinheit 12, eine Baueinheit 13 sowie eine Bereitstellungseinheit 14. Die Übersetzungseinheit 11 empfängt und prozessiert die Konfigurationsdatei. Die Zuordnungseinheit 12 erstellt Integritätsregeln für jede Schicht und ordnet die spezifisch für eine Schicht erstellte Integrationsregel der entsprechenden Schicht zu. Alternativ kann die Integritätsregel auch außerhalb der Zusammenbauvorrichtung 10 erstellt und vorgegebene Integritätsregeln von der Zuordnungseinheit 12 empfangen und weiterverarbeitet werden. In der Zuordnungseinheit 12 können beispielsweise auch Integritätswerte für die einzelnen Schichten generiert und an eine Referenzdatenbank 40 über eine Bereitstellungseinheit 14 bereitgestellt werden.

Die Zusammenbauvorrichtung 10 umfasst des Weiteren eine Baueinheit 13, die das Containerabbild zusammenbaut sowie die Bereitstellungseinheit 14, beispielsweise eine Ein- und Ausgabeschnittstelle, die derart konfiguriert ist, dass Containerabbild und die Integritätsregeln beispielsweise über die Registervorrichtung 20 an den Gastrechner 30 bereitzustellen.

Der Gastrechner 30 umfasst eine Erzeugungseinheit 31, die aus dem empfangenen Containerabbild die Containerinstanz erzeugt. Der Gastrechner 30 umfasst des Weiteren eine Überprüfungseinheit 32, die derart ausgebildet ist, jede einzelne Schicht gegenüber der zugeordneten Integritätsregel bei der Ausführung der Containerinstanz auf der Laufzeitumgebung zu überprüfen. Die Überprüfungseinheit 32 meldet das Überprüfungsergebnis bzw. die aus der Überprüfung resultierenden Maßnahmen an eine Ausführungseinheit 33, die die Maßnahmen abhängig von der zugeordneten Schicht-spezifischen Integritätsregel bzw. dem Prüfungsergebnis ausführt.

Die Erzeugungseinheit 31, die Überprüfungseinheit 32 sowie die Ausführungseinheit 33 können in einer Einheit integriert ausgebildet sein. Die Erzeugungs-, Überprüfungs- und Ausführungseinheit 31, 32, 33 können aber auch als separate eigenständige Komponenten vorliegen und einen oder mehrere Prozessoren enthalten, auf denen die Verfahrensschritte innerhalb eines Integritätsüberwachungsprogramms ausgeführt werden.

Zusammengefasst können mit dem beschriebenen Verfahren und dem Integritätsüberwachungssystem Integritätsregeln bereits beim Stellen des Containerabbilds innerhalb des Erzeugungsprozesses, insbesondere innerhalb eines kontinuierlichen Bereitstellungs- und Integrationsprozesses, hinterlegt werden. Schicht-basierte Integritätsregeln ermöglichen es, Container-instanzen flexibel zu schützen, die lediglich aus einem Teil der im Containerabbild enthaltenen Schichten gestartet wurden und ablaufen. Des Weiteren ist es möglich zu konfigurieren, ob Integritätsüberprüfungen zur Laufzeit über die Auswertung von Systemaufrufen oder zyklisch über die Referenzdatenbank durchgeführt werden. Durch das Bereitstellen einer Referenzdatenbank für Basisabbilder, kann beim Starten der Containerinstanz oder beim Bauen des eigentlichen Containerabbilds, lediglich die Abweichungen der Schichten vom Basisabbild in der Datenbank erfasst werden. Aktionen, die eine Integritätsverletzung verursachen, können entweder nur gemeldet oder komplett blockiert werden. Es kann überprüft werden, ob hinzugefügte Schichten konform sind zu den Richtlinien in der davor konfigurierten Schicht.

Alle beschriebenen und/oder gezeichneten Merkmale können im Rahmen der Erfindung vorteilhaft miteinander kombiniert werden. Die Erfindung ist nicht auf beschriebene Ausführungsbeispiele beschränkt.

## Patentansprüche

1. Verfahren zur erweiterten Integritätsüberwachung eines Containerabbilds (100), bei dem das Containerabbild (100) mindestens zwei Schichten (L1,..,L4), ein Basisabbild (L1) und mindestens eine Anwendungsschicht (L2, L3, L4), die mindestens eine Änderungsoperation auf dem Basisabbild (L1) ausführt, enthält mit folgenden Schritten:
- bei einem Zusammenbauen des Containerabbildes (100), Zuordnen (S1) einer für die Schicht spezifische Integritätsregel (R1, R2, R3, R4) zu dieser Schicht (L1, L2, L3, L4), für mindestens eine der Schichten des Containerabbilds (100),
- Bereitstellen (S2) des Containerabbilds (100) und der zugeordneten Integritätsregeln (R1, R2, R3, R4) an einen Gastrechner (30), und
- Erzeugen (S3) einer Containerinstanz basierend auf dem Containerabbild (100) durch eine Laufzeitumgebung des Gastrechners (30),
- Überprüfen (S4) jeder einzelnen Schicht (L1, L2, L3, L4) gegenüber der zugeordneten Integritätsregel (R1, R2, R3, R4) bei der Ausführung der Containerinstanz auf der Laufzeitumgebung, und
- Ausführen (S5) der Schicht (L1, L2, L3, L4) abhängig von der zugeordneten Schicht-spezifischen Integritätsregel (R1, R2, R3, R4).

2. Verfahren nach dem vorhergehenden Anspruch, wobei das Basisabbild (L1) mindestens eine Basisschicht (L11, L12, L13) enthält, und mindestens einer Basisschicht (L11, L12, L13) eine Basisschicht-spezifische Integritätsregel (Z11, Z12, Z13) zugeordnet wird.

3. Verfahren nach Anspruch 2, wobei bei einem Basisabbild (L1) mit mindestens zwei Basisschichten (L11, L12, L13) und mindestens zwei zugeordneten Basisschicht-spezifischen Integritätsregeln (Z11, Z12, Z13), beim Zusammenbauen (S1) des Containerabbildes (100) geprüft wird, ob sich die Basisschicht-spezifischen Integritätsregeln (Z11, Z12, Z13) gegenseitig ausschließen, und falls dies der Fall ist, lediglich die in ihrer Abfolge erste oder letzte Basisschicht-spezifischen Integritätsregel (Z11, Z13) gekennzeichnet und dem Basisabbild (L1) als Ganzes zugeordnet wird.

4. Verfahren nach Anspruch 3, wobei durch eine Konfigurationseinstellung für das Zusammenbauen des Containerabbilds (100) vorgegeben wird, ob die erste oder die letzte Basisschicht-spezifischen Integritätsregel (Z11, Z13) dem Basisabbild (L1) als Ganzes zugeordnet wird.

5. Verfahren nach einem der vorangehenden Ansprüche, wobei beim Zusammenbauen (S1) des Containerabbildes (100), die Schicht-spezifischen Integritätsregeln (R1, R2, R3, R4) mit jeweils einer Zuordnungskennung (Z1, Z2, Z3, Z4) zur zugeordneten Schicht (L1, L2, L3, L4) in einer eigenständigen Datei (110) angeordnet werden.

6. Verfahren nach einem der Ansprüche 1 bis 4, wobei beim Zusammenbauen (S1) des Containerabbildes (100), die Schicht-spezifischen Integritätsregeln (R1, R2, R3, R4) in einer Metainformation zu den Schichten (L1, L2, L3, L4) des Containerabbilds (100) angeordnet werden.

7. Verfahren nach einem der vorherigen Ansprüche, wobei beim Zusammenbau (S1) des Containerabbilds (100) eine Verträglichkeit zwischen der Schicht (L1, L2, L3, L4) und der Schicht-spezifischen Integritätsregel (R1, R2, R3, R4) der vorherigen Schicht überprüft wird und wobei eine Art des weiteren Zusammenbaus des Containerabbilds (100) konfigurierbar ist, wenn eine Unverträglichkeit festgestellt wird.

8. Verfahren nach einem der vorhergehenden Ansprüche, wobei das Überprüfen (S3) jeder einzelnen Schicht (L1, L2, L3, L4) gegenüber der zugeordneten Schicht-spezifischen Integritätsregel (R1, R2, R3, R4) mittels einer Auswertung von Ereignisbasierten Systemaufrufen der Containerinstanz während der Laufzeit erfolgt.

9. Verfahren nach einem der Ansprüche 1 bis 7, wobei zum Überprüfen (S3) jeder einzelnen Schicht (L11, L12, L13) gegenüber der zugeordneten Schicht-spezifischen Integritätsregel (R1, R2, R3, R4) in zeitlich zyklischen Abständen ein Hashwert über die aus dem Containerabbild (100) erstellte Containerinstanz ermittelt und als Integritätswert einer Referenzdatenbank (40) bereitgestellt und mit mindestens einem vorgegebenen Integritätswert in der Referenzdatenbank verglichen wird.

10. Verfahren nach Anspruch 8 oder 9, wobei die vorgegebenen Integritätswerte und die Referenzdatenbank (40) beim Zusammenbauen des Containerabbilds erstellt werden.

11. Verfahren nach Anspruch 9, wobei die Referenzdatenbank (40) beim Start des Containerabbilds (100) auf der Laufzeitumgebung der Gastrechners (30) erstellt wird.

12. Verfahren nach einem der Ansprüche 8 bis 11, wobei eine Basis-Referenzdatenbank für das Basisabbild (L1) vor Ausführung der mindestens einen Anwendungsschicht (L2, L3, L4) an die Laufzeitumgebung des Gastrechners (30) bereitgestellt wird und für jede nachfolgende Schicht ein Unterschiedswert zur vorhergehenden Schicht innerhalb der Basis-Referenzdatenbank ermittelt wird.

13. Verfahren nach Anspruch 8 oder 9, wobei eine maximale Anzahl von Systemaufrufen festlegbar ist, ab der von einer Überprüfung mittels der Auswertung von Ereignissen-basierten Systemaufrufen zu der Überprüfung mittels Erstellens von Hashwerten gewechselt wird.

14. System zur erweiterten Integritätsüberwachung eines Containerabbilds mit mindestens zwei Schichten, umfassend eine Zusammenbauvorrichtung (10) und einen Gastrechner (30) mit einer Laufzeitumgebung, wobei die Zusammenbaueinrichtung (10) derart ausgebildet ist,
- bei einem Zusammenbauen des Containerabbildes (100), eine für die Schicht spezifische Integritätsregel (R1, R2, R3, R4) dieser Schicht (L1, L2, L3, L4), für mindestens eine der Schichten (L1, L2, L3, L4) des Containerabbilds (100), zuzuordnen,
- das Containerabbild (100) und die zugeordneten Integritätsregeln (R1, R2, R3, R4) an den Gastrechner (30) bereitzustellen, und
der Gastrechner (30) derart ausgebildet ist:
- eine Containerinstanz basierend auf dem Containerabbild (100) durch die Laufzeitumgebung des Gastrechners (30) zu erzeugen,
- jede einzelne Schicht (L1, L2, L3, L4) gegenüber der zugeordneten Integritätsregel (R1, R2, R3, R4) bei der Ausführung der Containerinstanz auf der Laufzeitumgebung zu überprüfen, und
- die Schicht (L1, L2, L3, L4) abhängig von der zugeordneten Schicht-spezifischen Integritätsregel (R1, R2, R3, R4) auszuführen.

15. Computerprogrammprodukt, umfassend ein nicht flüchtiges Computerlesbares Medium, das direkt in einen Speicher eines digitalen Computers ladbar ist, umfassend Programmcodeteile, die dazu geeignet sind, die Schritte des Verfahrens nach einem der Ansprüche 1 bis 13 durchzuführen.
